# EUROPEAN PATENT APPLICATION

(11) **EP 0 633 422 A1**
(43) Date of publication of application: **11.01.1995**
(21) Application number: 94110482.0
(22) Date of filing: 06.07.1994
(51) Int. Cl.: F17C 1/14, F17C 1/02, B60K 15/03

(54) **Conformable compressed gas storage tank**

(30) Priority: 09.07.1993 US 89872
(71) Applicant: ROCKWELL INTERNATIONAL CORPORATION, Seal Beach California 90740 (US)
(72) Inventor: Mahoney, Murray W., Camarillo, CA 93010 (US)
(74) Representative: Wächtershäuser, Günter, Prof. Dr.

(57) **Abstract**

A compressed gas storage tank (10) is fabricated to conform to the dimensions of a convenient and/or available space, such as under the floor of an automobile. The tank comprises a shell (11-16) having at least a portion (11,12,14,15) fabricated from a superplastically formable material. The superplastic material is bonded to internal structural support members (17,18) and the remaining portions (16) of the shell. Bonding may be achieved by known methods such as welding and/or diffusion bonding. The internal support members, which need not comprise superplastic material, are positioned internally to provide optimum resistance to gas pressure hoop stresses. In contrast to a thick-walled cylinder, the tank of the present invention may be formed into an irregular shape allowing the tank to fit, for example, under a large fraction of the floor of an automobile by conforming to the available space. The relatively low gas containment efficiency of such an irregular shape is reinforced by the strength and toughness of the shell material, the internal trusses, and stiffening beads or ribs (13) that together constrain the hoop stresses caused by the compressed gas.

## Description

### TECHNICAL FIELD

The present invention relates to tanks for storing compressed gas and, in particular, to a light weight compressed gas tank that can be fabricated to conform to a convenient and/or available space.

### BACKGROUND OF THE INVENTION

Natural gas is among the leading contenders for fueling low emission automotive vehicles. The cost of purchasing and operating natural gas vehicles (NGVs) during the next decade is projected to be significantly lower than that for electric vehicles. With present technology, electric power for automotive vehicles is not economically competitive with the internal combustion engine.

The development of technology related to compressed natural gas (CNG) for fueling NGVs has strong economic advantages, such as improving U.S. balance of trade by reducing requirements for oil imports, establishing self-sufficiency in energy needs, and creating new industries and jobs. Estimates indicate that the continental United States has a 200 year supply of recoverable natural gas, with procurement costs of CNG no greater than the wholesale cost of unleaded gasoline. Furthermore, NGVs achieve about the same number of miles per gallon as gasoline powered vehicles while incurring lower operating costs.

CNG has the lowest overall emission profile of all fossil fuels. As a result, NGVs are essentially smoke-free, producing an invisible exhaust that contains virtually no particulates. Because natural gas has fewer heavy hydrocarbons, it burns more completely than gasoline or diesel fuel and produces only a fraction of the carbon monoxide. The primary hydrocarbon in the exhaust emissions of NGVs is CH₄, which does not react in the atmosphere to produce ozone. Test results indicate that NGVs can achieve emission levels below those defined for ultra-low emission vehicles.

Clean-burning CNG-powered vehicles offer significant improvements in engine component wear. Pistons, piston rings, cylinder walls, and valve train components exhibit less wear because of reduced fuel dilution and reduced oil contamination from abrasive soot particles. The lean-burning CNG engines also operate at lower combustion temperatures, thereby reducing oil oxidation. The high octane rating (130) of CNG allows engine designs having high compression ratios for better performance and economy. As a result of these advantages, routine maintenance activities, such as oil changes, spark plug replacement, and tune-ups, are required less frequently on NGVs. All of these factors tend to yield lower maintenance costs and longer engine life for NGVs with significantly less pollution.

An analysis of NGVs over the 25 billion miles that they have been driven worldwide indicates that they are substantially safer than gasoline powered vehicles. Their good safety record results, in part, from the properties of CNG. Natural gas is safer than gasoline, methanol, ethanol, and diesel fuel because it is nontoxic and lighter than air: it simply dissipates if a leak occurs. Natural gas is also much less likely than gasoline to detonate because of its high ignition energy requirements. Natural gas burns only in concentrations of about 6 to 16% by volume. A mixture of air and natural gas ignites at approximately 1300°F versus 850°F for gasoline. Therefore, a lit cigarette will not ignite natural gas. The primary safety concern associated with CNG is that a leak can build up a concentration of gas in an enclosed area such as a garage.

In the development of NGVs, there has been a long-felt need for a CNG fuel tank that has lower weight, lower cost, and a geometry that can be conformed to the shape of the space available in an automobile (such as the shape of a typical gasoline or diesel fuel tank, for example). Conventional CNG tanks are fabricated as cylinders of steel or fiber wound aluminum. Steel tanks are very heavy and have nonconformable geometries. Fiber wound tanks are nonconformable in shape and expensive to manufacture. For automobiles, cylindrical CNG tanks are generally placed in the trunk, where they occupy considerable volume and add excessive weight. Unfortunately, the weight, cost, and occupied volume of CNG fuel tanks is the primary obstacle to widespread use of CNG for automotive vehicles. Thus, the lack of a suitable compressed gas storage tank has drastically hindered the development of NGVs. With the perfection of an acceptable tank, it is possible that CNG may become the preferred fuel for automotive use, with convenient gas compressors connected to residential gas lines for refueling automobiles right at home.

### SUMMARY OF THE INVENTION

The present invention comprises a compressed gas storage tank that can be fabricated to conform to the dimensions of a convenient and/or available space, such as under the floor of an automotive vehicle. The tank comprises a shell having at least a portion fabricated from a superplastically formable material (such as titanium, nickel, iron, and aluminum alloys, and suitable laminates thereof, for example). The superplastically formable material is bonded to the remaining portions of the shell and to internal structural support members, such as trusses or joists. Bonding may be achieved by known methods such as welding and/or diffusion bonding, for example. Bonding of the superplastically formable material may be accomplished before or after forming the material to the desired shape. The internal support members, which may be thicker than the shell material and need not comprise superplastic material, are positioned internally to provide optimum resistance to gas pressure hoop stresses. Placement and orientation of the internal support members are important considerations in preventing plastic deformation of the external shell of the compressed gas tank. With this internal support structure, the tank of the present invention may be formed into an irregular shape (instead of a thick-walled cylinder) allowing the tank to fit, for example, under a large fraction of the floor of an automobile by conforming to and nesting in the available space. The relatively lower gas containment efficiency of such an irregular shape is reinforced by the strength and toughness of the shell material and the internal support members that constrain the hoop stresses caused by the compressed gas.

A principal object of the invention is a compressed gas storage tank that can be fabricated to conform to the geometrically irregular dimensions of an available or convenient space. Features of the invention include superplastically formable shell material bonded to internal support members that provide constraint for gas pressure hoop stresses. Advantages of the invention include a variety of fabrication techniques for producing conformable tank designs, reduced tank weight, and lower overall occupied volume compared to conventional compressed gas tanks.

### BRIEF DESCRIPTION OF THE DRAWINGS

For a more complete understanding of the present invention and for further advantages thereof, the following Detailed Description of the Preferred Embodiment makes reference to the accompanying Drawings, in which:
FIGURE 1 is a is a top plan view of a compressed gas storage tank of the present invention formed in a "suitcase" shape;
FIGURE 2 is a cross-sectional view of the compressed gas tank shown in Figure 1 illustrating internal support members and a shell formed in a geometrically irregular shape; and
FIGURE 3 is a cross-sectional view of forming members welded together before superplastic expansion of a compressed gas storage tank of the present invention.

### DETAILED DESCRIPTION OF THE PREFERRED EMBODIMENT

The present invention comprises a compressed gas storage tank that is particularly suited for automotive vehicles where weight and occupied volume are important concerns. Conventional compressed gas storage tanks comprise steel or fiber-wound aluminum in the familiar cylindrical shape. Steel tanks are unacceptable for automobiles because of their great weight, and both steel and fiber-wound cylindrical tanks are unacceptable because of their high occupied volume. The tank of the present invention is constructed of high strength superplastically formable materials, which allow the tank to be formed into a geometrically irregular shape that conforms to and nests in a conveniently available space.

Superplasticity refers to the characteristic of some materials, such as alloys of titanium, aluminum, nickel, steel, and various laminates thereof, to extend to very high uniform tensile elongations prior to failure. Superplastic forming (SPF) is a process of molding sheet metal into the confines of a die. The SPF process includes confining a blank of metal to be formed in a containment vessel where gas pressure can be applied, raising the temperature of the metal blank to its superplastic temperature regime, and applying forming gas pressure to force the metal blank against the shaped forming surface of the die at a controlled strain rate. The advantages of superplastic forming include: 1) fabrication of complex and irregularly shaped components, some of which cannot be manufactured by any other method; 2) no spring back, which allows fabrication of exact repeatable shapes without expensive manual rework; 3) formability of various metals, including high strength aluminum alloys, alpha/beta titanium alloys, nickel base alloys, and steels; 4) semi-automation to minimize costs; 5) simultaneous fabrication of multiple parts; and 6) fabrication of internally supported multiple sheet structures by combining SPF with joining technologies such as welding and/or diffusion bonding. For many complex parts, SPF provides more efficiency in design, lighter weight, and lower costs than conventional manufacturing techniques.

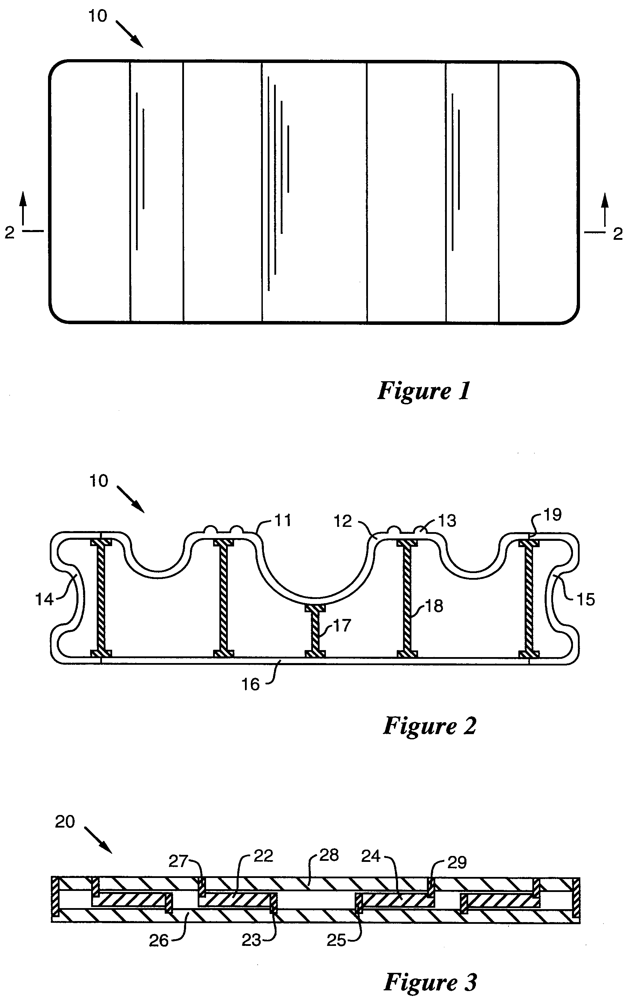

Figure 1 is a top plan view of an example of a compressed gas storage tank of the present invention. Instead of a conventional cylindrical shape, compressed gas tank 10 is formed in a "suitcase" shape (as an example) similar to that of a typical automobile gasoline tank. The materials and structure of an ordinary gasoline tank, however, are not suitable for the storage of compressed gas because of the very high pressures involved. The materials and fabrication techniques of superplastic forming allow the compressed gas tank of the present invention to be formed into a multiplicity of shapes in addition to the exemplary "suitcase" shape of tank 10.

The construction of compressed gas tank 10 is shown more clearly in Figure 2, which is a cross section of tank 10 taken along the section line 2-2 indicated in Figure 1. As illustrated in Figure 2, tank 10 includes a shell 11 that may comprise, for example, sections such as top panel 12, side panels 14 and 15, and bottom panel 16. At least a portion of shell 11 generally comprises a high-strength metal that is superplastically formable. By way of example, and not limitation, shell 11 may comprise a high strength aluminum alloy, an alpha/beta titanium alloy, a nickel base alloy, a superplastic steel, or some combination of the foregoing metals (such as aluminum and titanium alloys) in a laminar structure. As shown in Figure 2, panels 12, 14, and 15 are formed superplastically to acquire an irregular shape determined by the geometry of the space to be occupied by tank 10 and by the ability to withstand high stored gas pressures. Thus, portions of shell 11 may be formed to include concave areas and/or ribbed sections 13 for added strength. Other portions of shell 11, such as bottom panel 16, for example, may not require superplastic forming.

Compressed gas tank 10 includes an internal support structure, such as support members 17 and 18. The shape, number, and placement of internal support members in a structural framework is determined by the shape of shell 11 of tank 10 and by the structural requirements for shell 11 to withstand the hoop stresses generated by stored compressed gas. Typically, the support members include cutouts to reduce weight and allow the free flow of stored gas between compartments of tank 10. The support members are joined to shell 11 by high-strength bonds such as produced by welding or diffusion bonding, for example. The panels of shell 11 may be bonded or welded to the support members and to each other along seams, such as seam 19 between top panel 12 and side panel 15, for example.

Another method of forming the compressed gas tank of the present invention is by "accordion expansion" of a sandwich structure. The initial sandwich structure 20 of this process is illustrated schematically in Figure 3. In this process, truss pieces, such as 22 and 24, are joined by diffusion bonding or welds 23 and 25, respectively, to a bottom face sheet 26 of superplastic material. Welding may comprise partial penetration welding from the interior of bottom face sheet 26 so that the outer surface remains smooth without surface roughness associated with weld puddle drop-through. A top face sheet 28 may be welded at 27 and 29 from the outside surface to the opposite edges of truss pieces 22 and 24, respectively. The entire structure 20 may then be joined around the circumference except for a capillary gas insertion system for subsequent internal forming gas expansion of the face sheets into conforming dies during the superplastic forming process. Trusses such as 22 and 24 need not comprise superplastic material since these internal support members "unfold" during the superplastic expansion process. The expanded, superplastically formed structure might be similar to that illustrated in Figure 2. This process of expanding sandwich structures is described in greater detail in U.S. Pat. No. 4,361,262 issued to Israeli and U.S. Pat. No. 4,603,089 issued to Bampton, the teachings of which are hereby incorporated by reference.

Initial modeling studies of the compressed gas tank of the present invention indicate that high strength titanium alloys are preferable for fabricating a gas tank structure capable of proof testing to 5000 psi. Titanium alloys offer a number of benefits including light weight, fracture toughness, very high strength, corrosion resistance, superplastic formability, and weldability. At present, the major restriction on the use of titanium is the high cost. Alloys of steel are less expensive but substantially heavier. A commercial market exists for fiber-wound aluminum compressed gas cylinders, but their cost is high. Fiber-wound aluminum tanks have about the same weight and cost as tanks of the present invention, but they are not conformable to geometrically irregular shapes. It is anticipated that large production volumes will reduce the cost of a suitable superplastic titanium alloy to levels competitive with existing products in the automotive industry.

As described above, the compressed gas storage tank of the present invention comprises a shell having internal structural support members. At least a portion of the shell comprises material that can be superplastically formed into an irregular geometric shape for nesting the tank within an available space. Although the invention has been described and illustrated with respect to specific embodiments, various changes and modifications can be carried out by those skilled in the art without departing from the scope of the invention. In this regard, the forming methods and shapes illustrated and described above are merely examples, and not limitations, on the shapes and methods that may be used in producing a conformable compressed gas storage tank. Therefore, it is intended that the present invention encompass such changes and modifications as fall within the scope of the appended claims.

## Claims

1. A non cylindrical compressed gas storage tank (10), characterized by:
an outer shell (11) having at least a section (12) thereof formed of superplastically formable material;
at least one internal support member (17) bonded to said shell (11); and
said shell (11) formed to have an irregular shape conforming to an available space for placing the tank, said shell (11) with said bonded support member (17) withstanding hoop stresses produced by compressed gas stored in the tank (10).

2. The compressed gas tank (10) of Claim 1, further comprising a framework (17, 18) of internal structural support members (17, 18) bonded to said shell (11).

3. The compressed gas tank (10) of Claim 2, wherein said shell (11) comprises a plurality of sections (12, 14, 15, 16), said sections (12, 14, 15, 16) bonded together and to said internal framework (17, 18) to form the tank (10).

4. The compressed gas tank (10) of Claim 3, wherein said shell sections (12, 14, 15, 16) are bonded together and to said internal framework (17, 18) by welding.

5. The compressed gas tank (10) of Claim 3, wherein said at least one section (12) of superplastically formable material is superplastically formed to conform to said available space before bonding to said internal framework (17, 18) and other sections (14, 15, 16) of said shell (11).

6. The compressed gas tank (10) of Claim 3, wherein said at least one section (26) of superplastically formable material is bonded to said internal framework (22, 24) and other sections (28) of said shell before being formed by superplastic expansion to conform to said available space.

7. The compressed gas tank (10) of Claim 1, wherein said shell (11) is formed to include concave areas for resisting compressed gas pressure.

8. The compressed gas tank (10) of Claim 1, wherein said shell (11) is formed to include ribbed areas (13) for strengthening said shell (11) against compressed gas pressure.

9. The compressed gas tank (10) of Claim 1, wherein said superplastically formable material comprises a material selected from the group of metals consisting of titanium alloys, aluminum alloys, nickel alloys, steel, and laminar composites thereof.

10. The compressed gas tank (10) of Claim 1, wherein said shell (11) is formed to withstand compressed gas pressures ranging up to approximately 5000 psi.
